# EUROPÄISCHE PATENTSCHRIFT

(11) **EP 3 436 644 B1**
(45) Veröffentlichungstag und Bekanntmachung des Hinweises auf die Patenterteilung: **10.04.2024**
(21) Anmeldenummer: 17716476.1
(22) Anmeldetag: 22.03.2017
(51) Int. Cl.: E02F 3/88, E02F 9/08, B60P 1/64

(54) **MATERIALSAMMELBEHÄLTER EINES SAUGBAGGERS**
MATERIAL-COLLECTING CONTAINER OF A SUCTION DREDGER
RÉCIPIENT DE COLLECTE DE MATIÈRE D'UNE DRAGUE SUCEUSE

(30) Priorität: 31.03.2016 DE 102016105850
(43) Veröffentlichungstag der Anmeldung: 06.02.2019
(73) Patentinhaber: RSP GmbH & Co. KG, 07318 Saalfeld/Saale (DE)
(72) Erfinder: RENGER, Karl-Heinz, 07422 Saalfelder Höhe (DE); RENGER, Marina, 07422 Saalfelder Höhe (DE); GRABER, Jens, 07422 Saalfelder Höhe OT Unterwirbach (DE)
(74) Vertreter: Engel, Christoph Klaus
(86) Internationale Anmeldenummer: PCT/EP2017/056883
(87) Internationale Veröffentlichungsnummer: WO 2017/167625

(56) Entgegenhaltungen:
- DE-A1- 3 837 670
- US-A- 4 062 664
- US-A- 4 200 334
- US-A- 5 333 969
- US-A1- 2010 196 129

## Beschreibung

Die vorliegende Erfindung betrifft einen Materialsammelbehälter eines Saugbaggers. Solche Materialsammelbehälter besitzen einen Sauganschluss, zumeist an ihrer hinteren Stirnwand, und eine Saugstromführung, die vom Sauganschluss durch eine Sammelkammer und eine Filtereinheit führt.

Bei einem Saugbagger, der einen derartigen Materialsammelbehälter verwendet, handelt es sich um ein Fahrzeug mit einem Fahrzeuggestell mit einer Fahrzeuglängsachse, die in einer Fahrzeugmittenebene verläuft. Üblicherweise kommt ein auskippbarer Materialsammelbehälter zum Einsatz, der an einer parallel zur Fahrzeuglängsachse verlaufenden Kippachse aufgehängt ist. In zweckmäßigen Ausführungen besitzt ein solcher Saugbagger eine Teleskopiereinrichtung, die zwei Teleskoparme aufweist, deren behälterseitiges Ende jeweils an der Kippachse angeordnet ist, um welche der Materialsammelbehälter somit drehbar ist, wobei das gestellseitige Ende jedes Teleskoparms jeweils am Fahrzeuggestell angeordnet ist. Die den Materialsammelbehälter und dessen Lager- sowie Betätigungselemente umfassende Einheit kann bevorzugt in Form eines Entleerungsmoduls aufgebaut sein, welches sowohl auf einem Fahrzeug als auch bei Bedarf im stationären Betrieb ohne das Fahrzeug betrieben werden kann.

Im Zusammenhang mit Nutz- und Lastfahrzeugen ist es bekannt, dass auf einem sogenannten Fahrzeugchassis für den jeweiligen Einsatzzweck erforderliche Aufbauten angeordnet werden, die mehr oder weniger an den mobilen Einsatzfall angepasst sind. Solche Aufbauten werden mit dem Fahrzeuggestell verbunden, wobei in bestimmten Einsatzfällen der Fahrzeughauptantrieb auch als Antriebsaggregat für Zusatzfunktionen genutzt wird, gelegentlich die Aufbauten aber auch unabhängig vom Fahrzeug betriebsfähig sind. Bekannt sind beispielsweise Lastkraftwagen für Schüttgut, die einen Aufnahmebehälter für Material tragen, wobei zum Entladen des Schüttgutes der Aufnahmebehälter um eine Kippachse verkippt wird, sodass das Schüttgut aufgrund der Schwerkraft aus dem Behälter herausgleitet.

Aus der DE 38 37 670 A1 ist ein Saugbagger bekannt, umfassend einen pneumatischen Saugrüssel, einen Sammelbehälter für das aufgesaugte Erdreich, in den der Saugrüssel mündet und in dem das Erdreich aus dem Saugluftstrom abgeschieden wird, sowie ein an den Sammelbehälter angeschlossenes Sauggebläse zur Erzeugung des Saugluftstroms. Zu den weiteren üblichen Bestandteilen der Saugbagger gehören Führungselemente für den Saugrüssel und Filter zum Reinigen der Saugluft, bevor diese den Sammelbehälter wieder verlässt und an die Umgebung abgegeben wird. Bei der in dieser Druckschrift beschriebenen Bauform des Saugbaggers wird ein Sammelbehälter verwendet, der alternativ um jeweils eine von zwei in Fahrzeuglängsrichtung verlaufenden Kippachsen zur jeweiligen Fahrzugseite hin verkippt werden kann, um das im Sammelbehälter abgeschiedene Material auszuschütten. Die benutzte Kippanordnung entspricht weitestgehend der Gestaltung von Lastkraftwagen mit Kippermulden. Ein Nachteil eines solchen seitlichen Auskippens der Sammelbehälter besteht darin, dass das aufgenommene Material unmittelbar neben dem Fahrzeug zu Boden fällt und bei größeren Materialmengen ein vollständiges Entleeren des Materialsammelbehälters in nur einem Kippvorgang erschwert sein kann. Das Fahrzeug muss daher entweder während des Kippvorgangs verfahren werden oder das Auskippen des Materials muss in einen tiefer gelegenen Bereich erfolgen, um auf diese Weise größere Materialmengen aufnehmen zu können.

Aus der DE 10 2012 003 226 A1 ist ein kippbarer Behälter, insbesondere für Saugbagger bekannt, bei welchem die Kippachse oberhalb des Behälterbodens, vorzugsweise in der oberen Hälfte des Behälters angeordnet ist. Der Sauganschluss, an welchen ein Saugrohr an den Materialsammelbehälter anschließbar ist, befindet sich seitlich an der hinteren Stirnwand des Materialsammelbehälters. Um den Behälter zu entleeren, kann dieser mithilfe einer Hydraulik zunächst angehoben und dabei seitlich verlagert werden, sodass die Kippachse in eine erhöhte Position verfahren wird. Ein zweiter Linearantrieb wirkt daraufhin auf den Behälter ein, um diesen um die Kippachse zu schwenken. Vor dem Entleerungsvorgang muss ein auf dem Behälter angeordneter Deckel durch eine eigene Hydraulik geöffnet und zur Seite verschwenkt werden, um das Anheben und Verkippen des Behälters zu gestatten. Der Aufbau dieses Saugbaggers ist entsprechend kompliziert, wartungsanfällig und teuer. Außerdem hat der vorbekannte Saugbagger den entscheidenden Nachteil, dass der Behälter nur nach einer Fahrzeugseite hin kippbar ist, wodurch der flexible Einsatz des Saugbaggers erheblich eingeschränkt wird.

Die DE 10 2011 119 924 A1 zeigt einen Saugbagger zum Aufnehmen von Sauggut, wie Erdreich oder Schlämme, mit einer pneumatischen Saugturbine zur Erzeugung eines Saugluftstromes, die an einem Sammelbehälter angeschlossen ist, in welchen ein Saugschlauch mündet. Der Saugschlauch ist an einem Führungsarm angeordnet, welcher an einer vertikalen Drehachse befestigt ist, um den Arbeitsbereich des Saugbaggers zu erweitern. An dem Materialsammelbehälter sind zwei Saugschlauchanschlüsse vorgesehen, die jeweils am äußeren Seitenbereich einer hinteren Stirnwand in den Sammelbehälter münden. Der über die Drehachse befestigte Schwenkarm gestattet zwar eine Erweiterung des Arbeitsbereichs an den beiden Fahrzeugseiten, führt allerdings zu einer wesentlichen Verlängerung der Gesamtlänge des Saugbaggers und zu einer Verschlechterung der Lage des Schwerpunkts des Fahrzeugs. Außerdem ist es erforderlich, den Saugschlauch an dem jeweils benötigten Anschluss zu befestigen. Bei einer Änderung der Arbeitssituation muss der Saugschlauch durch Demontage und erneute Montage an dem anderen Sauganschluss angebracht werden. Die jeweils erforderliche Abdichtung der nicht verwendeten Saugöffnung am Materialsammelbehälter führt zu einem erhöhten Aufwand.

Die DE 198 51 111 C1 beschreibt einen Saugbagger mit einer im Materialsammelbehälter in Fahrtrichtung vorn angeordneten Sammelkammer und in Fahrtrichtung hinten liegendem Filter. Der Anschluss des Saugrohrs an dem Materialsammelbehälter erfolgt wiederum an einer Seite des Hecks des Sammelbehälters. Dies ermöglicht zwar einen weiten Arbeitsbereich auf der dem Sauganschluss naheliegenden Seite, schränkt den Arbeitsbereich auf der anderen Seite aber ein. Durch die gewählte Saugstromführung kommt es sowohl zu einer unsymmetrischen Ablagerung des Materials in der Sammelkammer als auch zu einer schlechten Vorabscheidung von Material aus dem Saugstrom.

Auch in der DE 299 02 562 U1 ist ein Saugbagger beschrieben. Dieser arbeitet nach dem Dünnstrom-Förderprinzip und ist hauptsächlich zum Aufnehmen von Bodenaushub konfiguriert.

Die DE 10 2014 103 604 B3 zeigt ein Saugsystem zur Erzeugung eines Saugstromes innerhalb einer Saugstromleitung mittels eines Ventilatorsystems und eines Pumpensystems, welche in der Saugstromleitung angeordnet sind. Das Ventilatorsystem ist innerhalb einer ersten internen Luftführung zur Führung eines ersten Teilsaugstroms angeordnet, während das Pumpensystem innerhalb einer zweiten internen Luftführung zur Führung eines zweiten Teilsaugstroms lufttechnisch parallel zum Ventilatorsystem angeordnet ist. Die mittels Ventilatorsystem und Pumpensystem erzeugten Saugstromanteile sind anpassbar.

Die US 3 930 324 A beschreibt eine mechanische Lochgrabmaschine umfassend ein rotierendes Schneidwerkzeug und ein Saugrohr mit einer in Nähe des Schneidwerkzeuges befindlichen Einlassöffnung. Das Saugrohr ist an eine Absaugeinrichtung angeschlossen. Das von dem Schneidwerkzeug abgetragene Material gelangt durch die Saugwirkung in eine Sammelkammer.

Die DE 295 08 516 U1 befasst sich mit einer Sauganlage zum Ausheben von Versorgungskanälen. Die Sauganlage umfasst einen bewegbaren Auslegerarm, welcher auf einem Fahrzeug montiert ist. An dem Auslegerarm befindet sich ein Sammelbehälter, der an der Unterseite eine bewegbare Verschlussplatte aufweist. An dem Sammelbehälter sind mit seitlichem Abstand von einem Unterseitenscheitel abwärtsragende Abstellstützen angebracht.

Aus der US 4 062 664 A ist ein mobiler mehrstufiger Partikelabscheider bekannt, der einen Zentrifugalabscheider zum Abscheiden schwerer Partikel umfasst. Nach Durchlaufen des Zentrifugalabscheiders werden die Luft und die in der Luft enthaltenen leichteren Partikel mittels einer Düse beschleunigt und durch eine Öffnung einem Linearabscheider zugeführt. Die Luft strömt in dem Linearabscheider nach unten, leichtere Partikel werden abgeschieden. Die von den leichteren Partikeln befreite Luft strömt nach oben, wobei der Luftstrom in zwei Teilströme geteilt wird. Die Teilströme verlassen die Öffnung des Linearabscheiders, wobei sie so geführt werden, dass sie den einströmenden Luftstrom nicht kreuzen. Nachfolgend werden die Teilströme jeweils in einen vertikalen Luftkanal geleitet.

Die Luftkanäle erstrecken sich beidseitig des Linearabscheiders. Die Teilströme gelangen anschließend über Filterkammern nach oben, wobei die in den Teilströmen enthaltenen leichtesten Partikel herausgefiltert werden. Nach Durchlaufen der Filterkammern werden die Teilströme jeweils in einen, am oberen Ende der Filterkammer angeordneten, horizontalen Kanal geleitet. Die horizontalen Kanäle sind an einen Kanal angeschlossen, welcher wiederum mit einem Gebläse des Partikelabscheiders in Verbindung steht. Die gereinigte Luft wird dem Gebläse zugeführt.

Die US 2010/0196129 A1 zeigt eine Vorrichtung zum Trennen von Feststoffen oder Flüssigkeiten aus Luft in einem Vakuumbehälter, welcher zum Vakuumausheben von Erdmaterialien ausgebildet ist. Die Vorrichtung umfasst eine mobile Plattform, den Vakuumbehälter, eine Vakuumerzeugungseinheit, eine Zugangstüreinrichtung, eine Vakuumleitungseinrichtung und eine Luftfiltergehäuseeinrichtung mit Luftfiltern. Über eine Luftleitung wird Luft von dem Behälter zu den Luftfiltern geleitet. Feststoffe werden über die Vakuumleitungseinrichtung dem Behälter durch dessen Rückwand zugeführt. Durch das Anordnen der Luftleitung und der Vakuumleitungseinrichtung nebeneinander am Behälter wird ein Zykloneffekt in dem Behälter erzeugt.

Die Aufgabe der vorliegenden Erfindung besteht darin, einen verbesserten Materialsammelbehälter für einen Saugbagger bereitzustellen, der einerseits einen im Wesentlichen gleich großen Arbeitsbereich auf beiden Seiten des Saugbaggers zur Verfügung stellt und der gleichzeitig eine verbesserte Abscheidung des aufgenommenen Materials aus dem Saugstrom gestattet, wobei dieses Material im Wesentlichen symmetrisch zur Fahrzeuglängsachse des Saugbaggers abgelegt wird, um auch bei gefülltem Materialsammelbehälter eine asymmetrische Belastung des Fahrzeugs zu vermeiden.

Diese und weitere Aufgaben werden durch einen Materialsammelbehälter gemäß dem beigefügten Anspruch 1 gelöst. Außerdem wird die genannte Aufgabe durch einen Saugbagger gemäß dem beigefügten Anspruch 5 gelöst, welcher von einem derartigen Materialsammelbehälter Gebrauch macht.

Der erfindungsgemäße Materialsammelbehälter zeichnet sich zunächst dadurch aus, dass der Sauganschluss, an welchem der Saugschlauch angeschlossen wird, derart an der hinteren Stirnwand des Materialsammelbehälters positioniert ist, dass die Symmetrieebene des Materialsammelbehälters durch die Querschnittsfläche des Sauganschlusses verläuft. Insbesondere liegt der Mittelpunkt der Öffnung des Sauganschlusses auf einer Achse, die in oder nahe bei der Symmetrieebene des Materialsammelbehälters liegt. Außerdem ist der Materialsammelbehälter derart aufgebaut, dass der beim Betrieb entstehende Saugstrom nach dem Durchlaufen der Sammelkammer in mindestens zwei Teilströme aufgeteilt wird, die in beidseitig der Symmetrieebene angeordneten Luftkanälen geführt werden. Gemäß einer bevorzugten Ausführungsform verlaufen die beidseitigen Luftkanäle jeweils an den längsseitigen Seitenwänden des Materialsammelbehälters, sodass bei der genannten mittigen Zuführung des Saugstroms am Sauganschluss eine gleichmäßige Aufteilung in zwei Teilströme erfolgt, die im Wesentlichen mit demselben Volumen in den vorzugsweise identisch ausgebildeten seitlichen Luftkanälen weitergeführt werden. Dies hat zur Folge, dass das im Saugstrom enthaltene Material im Wesentlichen symmetrisch verteilt in der Sammelkammer abgelegt wird, bevor die Teilströme in die Luftkanäle an den Seitenwänden des Materialsammelbehälters einströmen.

Bei einer besonders zweckmäßigen Ausführungsform befindet sich die Symmetrieebene des Materialsammelbehälters in einem nicht verkippten Zustand des Materialsammelbehälters im Wesentlichen in der Fahrzeugmittenebene, sodass die erreichte Symmetrie im Materialsammelbehälter gleichzeitig die gewünschte Symmetrie des gesamten Fahrzeugs aufrechterhält.

Gemäß der Erfindung werden die Luftkanäle außerhalb der Sammelkammer wieder zusammengeführt, bevorzugt vor der in Fahrtrichtung vorderen Stirnseite des Materialsammelbehälters, sodass sie gemeinsam am Eingang eines Sauggebläses des Saugbaggers münden. Dieser gemeinsame Eingang des Sauggebläses befindet sich vorzugsweise ebenfalls in der Mittenebene des Fahrzeugs, sodass die Symmetrie auch an dieser Stelle aufrechterhalten bleibt.

Je nach Ausführungsform des Materialsammelbehälters kann die Sammelkammer vor oder hinter der Filtereinheit liegen, bezogen auf die Fahrtrichtung des Saugbaggers.

Eine bevorzugte Ausführungsform des Materialsammelbehälters besitzt einen Deckel, der mindestens zweigeteilt ist. Jedes Deckelteil ist dabei an einer in der Symmetrieebene des Materialsammelbehälters liegenden Klappachse drehbeweglich befestigt, sodass jeweils etwa die Hälfte der Oberseite des Materialsammelbehälters geöffnet werden kann, wenn dieser zum Entleeren verkippt wird. Besonders bevorzugt verlaufen in dem Deckel keinerlei Abschnitte der Luftkanäle, sodass der Deckel einfach und robust ausgeführt werden kann.

Besonders bevorzugt ist der Materialsammelbehälter in seiner Längsrichtung im Wesentlichen symmetrisch aufgebaut, insbesondere unter dem Gesichtspunkt der Lastverteilung. Von einem symmetrischen Aufbau im Sinne der vorliegenden Erfindung kann ausgegangen werden, wenn der Materialsammelbehälter bei Aufhängung entlang eine Kippachse und ohne Anwendung sonstiger Befestigungs- oder Lagerelemente selbsttätig in eine Position schwenkt, in welcher die Mittelebene im Wesentlichen senkrecht steht und die Oberseite des Materialsammelbehälter im Wesentlichen in einer horizontalen Ebene verläuft. Der Fachmann wird erkennen, dass ein in diesem Sinne symmetrischer Aufbau auch dann gegeben ist, wenn an dem Materialsammelbehälter zusätzliche Elemente, beispielsweise für die Befestigung oder andere Nebenfunktionen erforderliche Elemente, nur einseitig angebracht sind und insoweit keine streng geometrische Symmetrie gegeben ist.

Die Erfindung betrifft weiterhin einen Saugbagger mit einem derartigen Materialsammelbehälter. Vorzugsweise ist der Materialsammelbehälter so am Fahrzeug befestigt, dass er ausgekippt werden kann. Insbesondere ist ein Auskippen des Materialsammelbehälters auf beiden Fahrzeugseiten ermöglicht. Gleichzeitig ist es zweckmäßig, wenn eine erhöhte Position der Kippachse vorgesehen ist, um ein Entleeren des Materialsammelbehälters auf unterschiedlich hohe Flächen, beispielsweise ein nebenstehendes Fahrzeug zu gestatten.

Eine bevorzugte Ausführung des Saugbaggers zeichnet sich unter anderem dadurch aus, dass die Kippachse parallel zur Symmetrieebene des Materialsammelbehälters verläuft, wobei der seitliche Versatz zur Symmetrieebene weniger als 1/8, bevorzugt weniger als 1/12 der Breite des Materialsammelbehälters beträgt. Besonders bevorzugt verläuft die Kippachse in der Symmetrieebene des Materialsammelbehälters, die in einem Ruhe-, Arbeits- oder Transportzustand die Fahrzeuglängsachse einschließt.

Weiterhin zeichnet sich eine Ausführungsform des Saugbaggers dadurch aus, dass die gestellseitigen Enden der Teleskoparme besonders bevorzugt in der Fahrzeugmittenebene oder mit nur geringem seitlichen Versatz zu dieser von weniger als 1/8, bevorzugt weniger als 1/12 der Breite des Materialsammelbehälters am Fahrzeuggestell schwenkbeweglich befestigt sind. Dies hat zur Folge, dass die Teleskoparme in einem Ruhe- oder Transportzustand, also bei nicht gekipptem Materialsammelbehälter, im Wesentlichen senkrecht stehen und ebenfalls in der Fahrzeugmittenebene verlaufen. Dies hat auch den Vorteil, dass die Gewichtskraft in diesem Ruhe-, Arbeits- und Transportzustand die vom Materialsammelbehälter und dem darin befindlichen Material ausgeht, in Achsrichtung auf die Teleskoparme einwirkt, die in dieser Richtung hohe Kräfte aufnehmen können, soweit der Materialsammelbehälter nicht auf dem Gestell abgestellt ist. Letztlich können die Teleskoparme dadurch weniger massiv ausgeführt werden, denn vor allem bei einer Fahrzeugbewegung über unebenes Gelände gehen von dem Materialsammelbehälter und dem aufgenommenen Material hohe Beschleunigungskräfte aus, die in Längsrichtung der Teleskoparme wirken und damit gut aufgenommen werden können. Zwar wirken während eines Entleerungsvorgangs, wie er weiter unten noch beschrieben wird, auf die Teleskoparme auch Querkräfte ein, jedoch befindet sich das Fahrzeug in diesem Moment in Ruhe, sodass die resultierenden Gesamtkräfte nicht durch zusätzliche Impulse vergrößert werden.

Der Saugbagger besitzt gemäß einer bevorzugten Ausführungsform mindestens einen Drehantrieb am behälterseitigen Ende mindestens eines der Teleskoparme. Der Drehantrieb wirkt auf den Materialsammelbehälter ein, um diesen für einen Entleerungsvorgang um die Kippachse zu drehen. Auf Linearantriebe, die separat zwischen dem Materialsammelbehälter und dem Fahrzeuggestell wirken, lässt sich auf diese Weise verzichten. Um größere Kräfte aufzubringen und einen Gleichlauf zu bewirken, können bei einer bevorzugten Ausführungsform zwei Drehantriebe genutzt werden, die sich jeweils am behälterseitigen Ende der beiden Teleskoparme befinden.

Schließlich besitzt der Saugbagger bevorzugt einen oder mehrere Schwenkantriebe, die ein Verschwenken der Teleskoparme aus der Fahrzeugmittenebene heraus in beide Winkelrichtungen ermöglicht. Der Schwenkantrieb kann beispielsweise durch Hydraulikzylinder ausgeführt sein, die zwischen dem Fahrzuggestell und dem nicht längs veränderlichen Abschnitt des Teleskoparms wirken. Bei alternativen Ausführungsformen kann der Schwenkantrieb auch als ein weiterer Drehantrieb gestaltet sein, der am gestellseitigen Ende vorzugsweise beider Teleskoparme angreift. Ebenso kann der Schwenkantrieb andere Linearantriebe nutzen, die gegebenenfalls gegenläufig wirken, um eine Verschwenken in beide Fahrzeugseitenrichtungen zu gestatten.

Da der Anschluss für den Saugschlauch derart am Materialsammelbehälter vorgesehen ist, dass ein im wesentlichen symmetrischer Eintrag des eingesaugten Materials erfolgt, und die Luftabfuhr aus dem Sammelbehälter ebenfalls symmetrisch erfolgt, ist auch die Lastverteilung im Materialsammelbehälter unabhängig vom Füllstand ebenfalls im Wesentlichen symmetrisch.

Es ist vorteilhaft, wenn die Kippachse des Materialsammelbehälters durch zwei Drehlager verläuft, die sich an den quer zur Fahrtrichtung verlaufenden Stirnwänden des Materialsammelbehälters befinden. Besonders bevorzugt sind diese Drehlager in der oberen Hälfte des Materialsammelbehälters an den Stirnwänden angeordnet, sodass die Kippachse bereits im Ruhezustand deutlich oberhalb des Fahrgestells liegt, beispielsweise in einer Höhe von etwa 2 bis 3 m über der Fahrbahnebene. Eines der Drehlager kann in einer einfachen Ausführung als Zapfenlager gebildet sein.

Bei einer abgewandelten Ausführungsform sind die Drehlager mit einem in axialer Richtung wirkenden Kugelgelenk kombiniert, sodass insbesondere beim Ausfahren der Teleskoparme ein Höhenversatz zwischen den sich gegenüberliegenden Drehlagern auftreten kann, ohne das es zu einer Blockade des Drehlagers kommt. Wenn es die derart weitergebildeten Drehlager und die sonstige Konstruktion gestatten, einen solchen Höhenversatz bewusst einzustellen, kann die Kippachse in Längsrichtung gegenüber dem Fahrzeuggestell geneigt werden, sodass beispielsweise im Falle eines geneigt stehenden Fahrzeugs dennoch ein nahezu waagerechtes Auskippen des Materialsammelbehälters möglich bleibt oder auch in einem abgewandelten Fall gezielt eine Verlagerung des Materialsammelbehälters gegenüber der Horizontalen vorgenommen werden kann, beispielsweise um flüssige oder breiige Medien nur an einer Seite des Materialsammelbehälters auslaufen zu lassen.

Bei der Ausführungsform, die einen an der Oberseite des Materialsammelbehälters liegenden Deckel besitzt, wird dieser zur Entleerung geöffnet. Beim Auskippen des Materialsammelbehälters wird die Deckelhälfte auf der Fahrzeugseite geöffnet, zu welcher der Materialsammelbehälter ausgekippt wird. Es ist vorteilhaft, wenn Öffnungs-, Verschluss- und Verriegelungselemente vorgesehen sind, um den Deckel zuöffnen bzw. während des Saugbetriebs dicht zu verschließen, sodass die Druckverhältnisse im Materialsammelbehälter den Anforderungen eines Saugbaggers genügen.

In einer bevorzugten Ausführungsform sind die Teleskoparme des Saugbaggers so gestaltet, dass die Differenz der Länge zwischen dem komplett eingefahrenen und dem komplett ausgefahrenen Zustand mindestens 1/4, bevorzugt etwa 1/2 der Höhe des Materialsammelbehälters entspricht. Damit ist gewährleistet, dass der Materialsammelbehälter ausreichend weit angehoben werden kann, um beim nachfolgenden Verkippen keine sonstigen Teile des Fahrzeugs zu beschädigen. Gleichzeitig kann durch ein entsprechend weites Ausfahren der Teleskoparme sichergestellt werden, dass das Entleeren auf eine höhere Ebene möglich bleibt.

Das seitliche Verschwenken der Teleskoparme soll zumindest soweit ermöglicht sein, dass ein gefahrloses Auskippen des Materialsammelbehälters auf der jeweiligen Fahrzeugseite möglich ist, ohne dass das Fahrzeug dabei beschädigt oder durch das herausfallende Material beim Weiterfahren behindert wird. Bevorzugt können die Teleskoparme so weit zu jeder Fahrzeugseite verschwenkt werden, dass die auf die Ebene des Fahrzeuggestells projizierte Kippachse außerhalb der vom Fahrzeuggestell beschriebenen Grundfläche verläuft.

Weitere Einzelheiten, Vorteile und Weiterbildungen der vorliegenden Erfindung ergeben sich aus der nachfolgenden Beschreibung einer bevorzugen Ausführungsform unter Bezugnahme auf die Zeichnung. Es zeigen:
- Fig. 1: eine vereinfachte seitliche Schnittansicht eines Saugbaggers mit einem erfindungsgemäßen Materialsammelbehälter gemäß einer ersten Ausführungsform;
- Fig. 2: den Materialsammelbehälter der ersten Ausführungsform in einer perspektivischen Ansicht;
- Fig. 3: eine vereinfachte seitliche Schnittansicht eines Saugbaggers mit einem erfindungsgemäßen Materialsammelbehälter gemäß einer zweiten Ausführungsform;
- Fig. 4: den Materialsammelbehälter der zweiten Ausführungsform in einer perspektivischen Ansicht;
- Fig. 5: eine vereinfachte Ansicht des Saugbaggers von hinten;
- Fig. 6: eine perspektivische Ansicht eines Entleerungsmoduls des Saugbaggers mit gekipptem Materialsammelbehälter;
- Fig. 7: eine Ansicht des Saugbaggers von hinten während eines Entleerungsvorgangs.

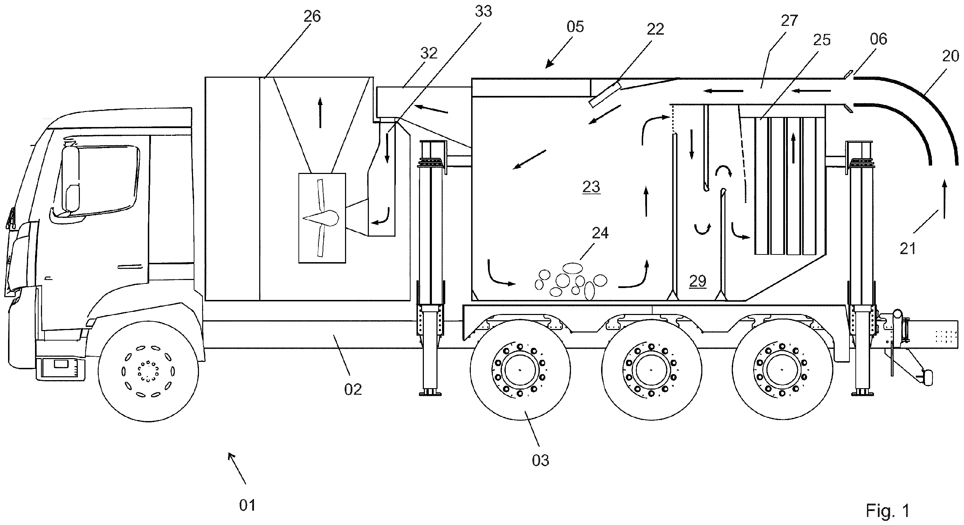

Fig. 1 zeigt in einer vereinfachten, teilweise geschnittenen Seitenansicht einen Saugbagger 01, der zunächst in herkömmlicher Weise ein Fahrzeuggestell bzw. einen Hilfsrahmen 02 sowie mehrere Fahrzeugräder 03 umfasst. Weiterhin umfasst der Saugbagger einen erfindungsgemäßen Materialsammelbehälter 05, der auf dem Fahrzeuggestell 02 montiert ist. An der hinteren Stirnseite des Materialsammelbehälters 05 ist ein Sauganschluss 06 vorgesehen, an welchem ein Saugschlauch 20 angeschlossen ist. Am freien Ende des Saugschlauchs 20 wird Material eingesaugt, mithilfe eines Saugstroms 21, der durch Strömungspfeile symbolisiert ist.

Bei der in Fig. 1 dargestellten Ausführungsform verläuft der Saugstrom 21 zunächst im oberen Bereich des Materialsammelbehälters 05 in einem oberen Luftkanal 27 bis zu einem Prallblech 22 und wird dort in eine Sammelkammer 23 gelenkt. Aufgrund der Volumenvergrößerung verringert sich in der Sammelkammer 23 die Strömungsgeschwindigkeit, sodass sich Material 24 in der Sammelkammer absetzt. Der Saugstrom verläuft dann in eine Filtereinheit 25, in welcher kleinere Partikel, die sich noch im Saugstrom befinden, herausgefiltert werden. Bei der dargestellten Ausführungsform befindet sich die Sammelkammer 23 in Fahrtrichtung vor der Filtereinheit 25.

Der Saugbagger 01 trägt außerdem ein Sauggebläse 26, welches den Luftstrom zur Ausbildung des Saugstroms 21 erzeugt und in Fahrtrichtung vor dem Materialsammelbehälter 05 positioniert ist.

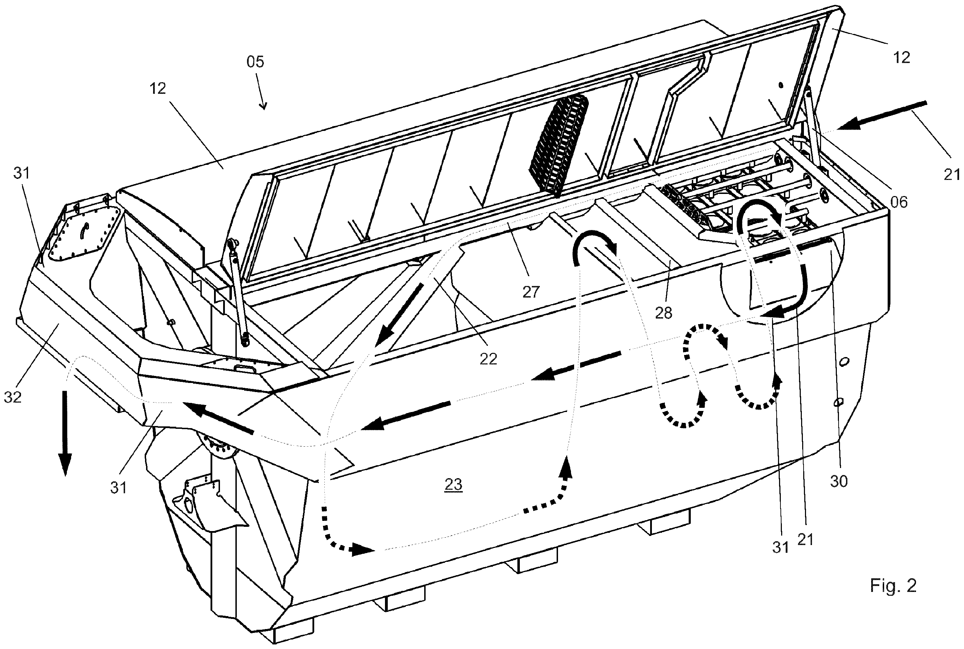

Fig. 2 zeigt eine perspektivische, teilweise geschnittene Ansicht des Materialsammelbehälters 05 gemäß der in Fig. 1 dargestellten Ausführungsform. Zunächst ist ersichtlich, dass der Materialsammelbehälter 05 an seiner Oberseite durch einen Deckel 12 verschlossen ist, der aus zwei Deckelteilen besteht. Die in Fahrtrichtung links liegende Deckelhälfte ist im geöffneten Zustand dargestellt, während die in Fahrtrichtung rechts liegende geschlossen ist. Die Strömungspfeile zeigen den Verlauf des Saugstroms 21 an, der zunächst an der hinteren Stirnwand in den Sauganschluss 06 eintritt und im oberen Luftkanal 27 bis zum Prallblech 22 strömt, um dort in den Innenraum der Sammelkammer 23 eingeleitet zu werden. Über mehrere Schikanen 28 eines Vorabscheiders 29 verläuft der Saugstrom zur Filtereinheit 25. Der Saugstrom 21 verlässt die Filtereinheit 25 an beiden Seiten des Materialsammelbehälters 05 jeweils durch einen seitlichen Auslass 30 und tritt dort jeweils in einen seitlichen Luftkanal 31 ein. Beide seitlichen Luftkanäle 31 verlaufen an der linken bzw. rechten Seitenwand des Materialsammelbehälters 05. Die beiden seitlichen Luftkanäle 31 werden an der vorderen Stirnseite des Materialsammelbehälters 05 in einem vorderen Luftkanal 32 zusammengeführt. Der vordere Luftkanal 32 mündet am Einlass 33 des Sauggebläses 26 (Fig. 1).

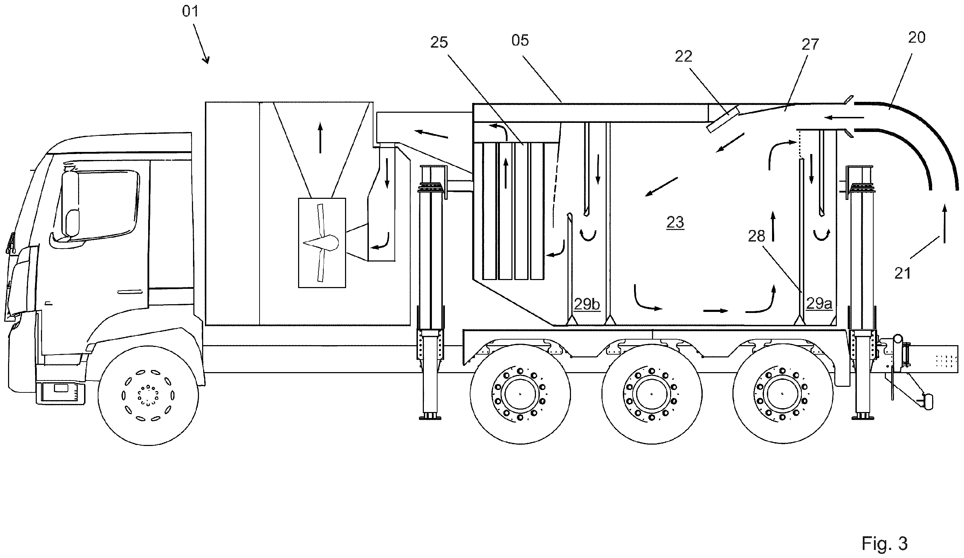

Fig. 3 zeigt eine abgewandelte Ausführungsform des Saugbaggers mit einem veränderten Materialsammelbehälter 05 die wesentliche Änderung gegenüber der zuvor beschriebenen Ausführungsform besteht darin, dass die Sammelkammer 23 in Fahrtrichtung hinter der Filtereinheit 25 angeordnet ist, was zu einer veränderten Führung des Saugstroms 21 im Bereich der Luftkanäle führt, wie es nachfolgend beschrieben ist.

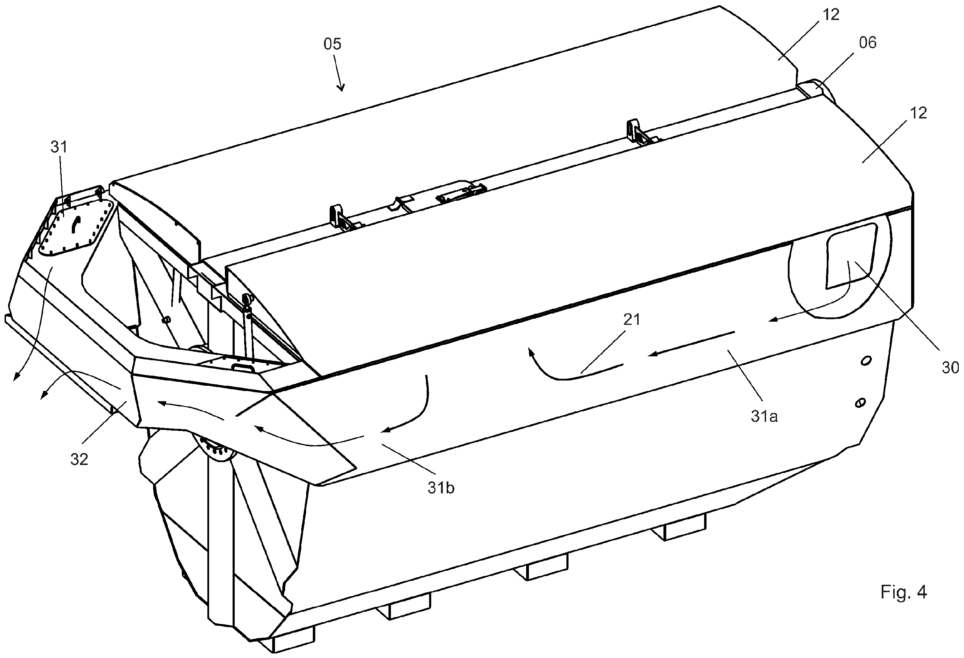

Fig. 4 zeigt die abgewandelte Ausführungsform des Materialsammelbehälters 05, wie er bei der Ausführungsform gemäß Fig. 3 zum Einsatz kommt. Wie aus der Zusammenschau von Fig. 3 und Fig. 4 ersichtlich ist, durchläuft der Saugstrom 21 zunächst einen im Vergleich zur Ausführungsform der Fig. 1 verkürzten oberen Luftkanal 27 und gelangt dann nach Ablagerung der groben Materials 24 in der Sammelkammer 23 über im hinteren Bereich angeordnete Schikanen 28 eines hinteren Vorabscheiders 29a durch die beiden seitlichen Auslässe 30 in die seitlichen Luftkanäle 31. Etwa im vorderen Drittel des Materialsammelbehälters 05 tritt der Saugstrom aus einem hinteren Abschnitt 31a der seitlichen Luftkanäle erneut in den Innenraum ein und zwar in einen vorderen Vorabscheider 29b, von wo aus er in die Filtereinheit 25 geführt wird. Nach dem Durchlaufen der Filtereinheit 5 gelangt der Luftstrom erneut in den Bereich des seitlichen Luftkanals 31, nämlich in einen vorderen Abschnitt 31b, und von dort aus zum vorderen Luftkanal 32, wo die beiden Teilströme wieder zusammengeführt werden.

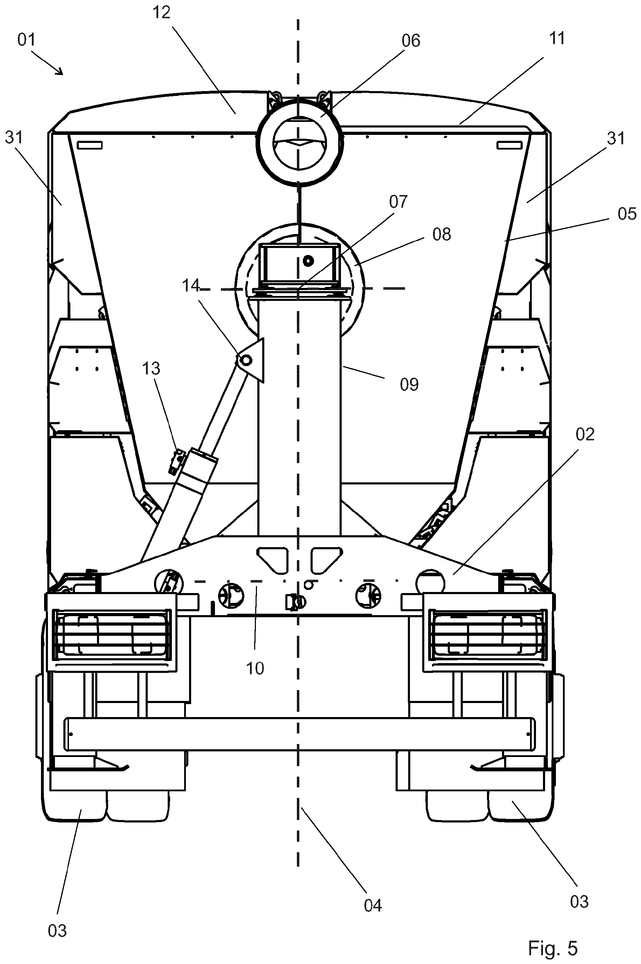

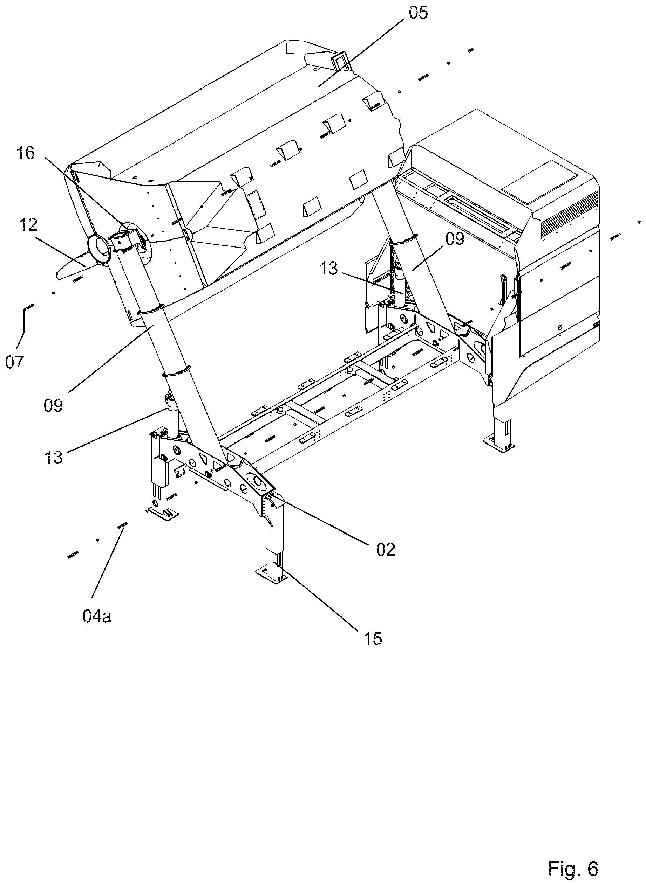

Fig. 5 zeigt in einer vereinfachten Ansicht von hinten den Saugbagger 01. In Bezug auf die Fahrzeugräder 03 ist das Fahrzeug symmetrisch zu einer Fahrzeugmittenebene 04 aufgebaut, die in Fig. 5 durch eine strichpunktierte Linie dargestellt ist. Eine Fahrzeuglängsachse 04a (Fig. 6) verläuft in der Fahrzeugmittenebene. Als Aufbauelement besitzt der Saugbagger 01 den Materialsammelbehälter 05, der in Form eines Entleerungsmoduls gestaltet sein kann. In dieser Ansicht ist gut erkennbar, dass der Sauganschluss 06 in der Mitte der hinteren Stirnwand am oberen Rand angeordnet ist, sodass der Mittelpunkt der Querschnittsfläche des Sauganschlusses in der Fahrzeugmittenebene 04 liegt.

Der Materialsammelbehälter 05 ist in einer Kippachse 07 aufgehangen, deren Verlauf durch zwei Drehlager 08 definiert ist, welche sich an den quer zur Fahrtrichtung des Saugbaggers verlaufenden Stirnwänden des Materialsammelbehälters 05 befinden.

Eine Teleskopiereinrichtung umfasst in der gezeigten Ausführungsform zwei Teleskoparme 09, deren behälterseitiges Ende je an eines der Drehlager 08 gekoppelt ist und deren gestellseitiges Ende jeweils an einem Schwenklager 10 schwenkbeweglich am Fahrzeuggestell 02 angebracht ist.

Wie sich aus Fig. 5 entnehmen lässt, befindet sich der Materialsammelbehälter 05 während einer Ruhe-, Transport- oder Arbeitsstellung im Wesentlichen mittig über dem Fahrzeuggestell bzw. einem Hilfsrahmen 02. Eine Oberseite 11 des Materialsammelbehälters 05 verläuft in diesem Zustand im Wesentlichen horizontal. Die Oberseite 11 ist dabei von dem Deckel 12 verschlossen. Die Teleskoparme 09 stehen im Wesentlichen senkrecht zur Ebene des Fahrzeuggestells 02.

Ein als Schwenkantrieb arbeitender Hydraulikzylinder 13 erstreckt sich zwischen dem Fahrzeuggestell 02 und einem Anlenkpunkt 14 am nicht längenveränderlichen Abschnitt des jeweiligen Teleskoparms 09. Der Schwenkantrieb 13 ist so gestaltet, dass er bei seiner Betätigung den Teleskoparm 09 in beide Winkelrichtungen aus der senkrechten Position, d. h. aus der Fahrzeugmittenebene 04 heraus nach links oder rechts schwenken kann.

Fig. 6 zeigt eine vereinfachte perspektivische Ansicht des Entleerungsmoduls, wie es Bestandteil des zuvor beschriebenen Saugbaggers 01 ist. In Fig. 6 sind die zum Saugbagger 01 gehörenden Chassis-Elemente weitgehend nicht dargestellt. Teile des Fahrzeuggestells können entweder unmittelbar dem Fahrzeug und/oder dem Hilfsrahmen des eigenständig aufgebauten Entleerungsmoduls zugerechnet werden.

Fig. 6 zeigt den Zustand der Entleerung des Materialsammelbehälters 05. Dazu werden die Teleskoparme 09 in Längsrichtung ausgefahren und nach Erreichen einer Mindesthöhe, die ein Verschwenken gestattet, durch Aktivierung des Schwenkantriebs 13 zu einer der beiden Fahrzeugseiten bzw. Modulseiten verschwenkt. Im dargestellten Beispiel wurde der Materialsammelbehälter 05 bezogen auf die Fahrtrichtung nach links verschwenkt.

Zum sicheren Stand des Saugbaggers während des Entleerungsvorgangs können Stützen 15 ausgefahren werden, sodass das Fahrzeug einen möglichst waagerechten Stand einnimmt.

Nach dem axialen Ausfahren der Teleskoparme 09 und dem Verschwenken wird ein Drehantrieb 16 aktiviert, der im Bereich der Drehlager 08 angeordnet bzw. in diese integriert sein kann. Die Aktivierung des Drehantriebs 16 bewirkt eine Drehung des Materialsammelbehälters 05 um die Kippachse 07, sodass sich die Oberseite 11 zur Seite bzw. nach unten neigt, um bei geöffnetem Deckel 12 das im Materialsammelbehälter 05 gesammelte Material auszukippen.

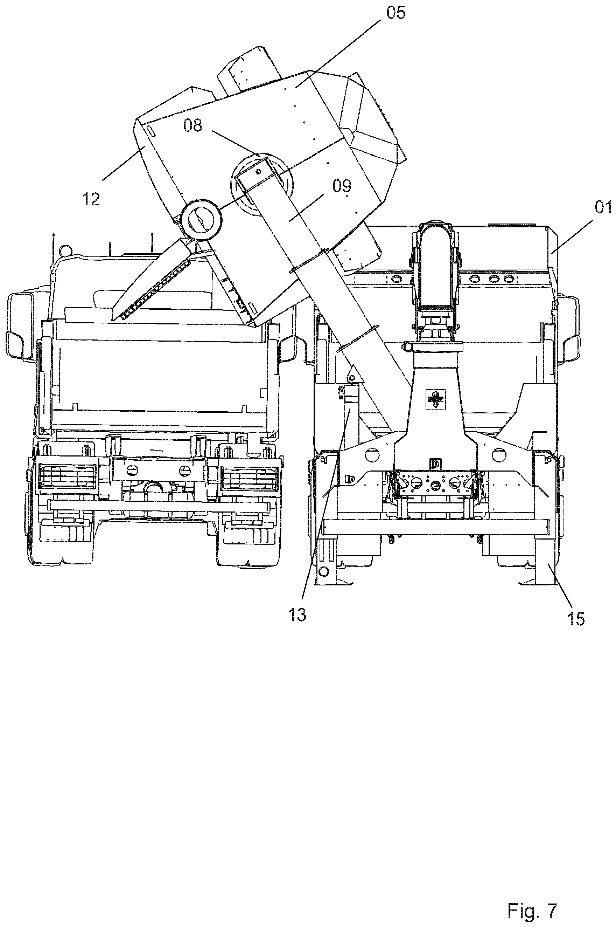

Fig. 7 zeigt in einer vereinfachten Ansicht von hinten nochmals den Zustand während der Entleerung des Materialsammelbehälters 05. In dieser Darstellung ist gut ersichtlich, dass durch das Ausfahren der Teleskoparme 09 die Kippachse 07 soweit nach oben verlagert ist, dass die bei verkipptem Materialsammelbehälter 05 unten liegende Kante der Oberseite 11 beispielsweise in einer Höhe von 2-3 m liegen kann, sodass ein Entleeren des Materialsammelbehälters 05 in einen neben dem Fahrzeug stehenden Lastkraftwagen möglich wird. Dafür ist es erforderlich, dass der Deckel 12 zumindest teilweise geöffnet ist, vorzugsweise durch Verschwenken einer Deckelhälfte um eine Klappachse, die etwa in der Mittelinie der Oberseite 11 verläuft.

Aus Fig. 7 ist auch ersichtlich, dass durch das seitliche Verschwenken der Teleskoparme 09 mithilfe des Schwenkantriebs 13 die Kippachse 07 links neben dem Saugbagger verläuft bzw. bei einem Verschwenken in die andere Richtung rechts neben dem Saugbagger 01 verlaufen kann. Ein Entleeren des Materialsammelbehälters 05 ist dadurch sowohl auf der linken als auch auf der rechten Seite des Saugbaggers möglich.

Die Teleskoparme 09 sind bevorzugt mit einer integrierten Linearführung ausgestattet und in an sich bekannter Weise durch Hydraulikzylinder ein- uns ausfahrbar. Im Regelfall wird ein paralleler Betrieb der beiden Teleskoparme durch eine entsprechende Steuerung ermöglicht, wobei in bestimmten Anwendungssituationen auch ein unterschiedlich starkes Ausfahren der beiden Teleskoparme zweckmäßig sein kann.

Um Verwindungen zu vermeiden ist bevorzugt jedem der beiden Teleskoparme 09 ein Schwenkantrieb 13 zugeordnet, wie es aus Fig. 6 ersichtlich ist. Diese beiden Schwenkantriebe 13 werden ebenfalls im Gleichlauf betrieben. An den behälterseitigen Enden der Teleskoparme 09 kann jeweils der genannte Drehantrieb 16 angeordnet sein oder nur einer der Teleskoparme 09 ist mit dem Drehantrieb ausgerüstet, während an dem anderen Teleskoparm eine Zapfenlagerung das Drehlager realisiert.

### Bezugszeichenliste

- 01: Saugbagger
- 02: Fahrzeuggestell / Hilfsrahmen
- 03: Fahrzeugräder
- 04: Fahrzeugmittenebene
- 04a: Fahrzeuglängsachse
- 05: Materialsammelbehälter
- 06: Sauganschluss
- 07: Kippachse
- 08: Drehlager
- 09: Teleskoparme
- 10: Schwenklager
- 11: Oberseite
- 12: Deckel
- 13: Schwenkantrieb
- 14: Anlenkpunkt
- 15: Stützen
- 16: Drehantrieb
- 20: Saugschlauch
- 21: Saugstrom
- 22: Prallblech
- 23: Sammelkammer
- 24: abgelagertes Material
- 25: Filtereinheit
- 26: Sauggebläse
- 27: oberer Luftkanal
- 28: Schikanen
- 29: Vorabscheider
- 30: seitlicher Auslass
- 31: seitlicher Luftkanal
- 32: vorderer Luftkanal
- 33: Einlass des Sauggebläses

## Patentansprüche

1. Materialsammelbehälter (05) für einen Saugbagger (01) mit einem Sauganschluss (06) an seiner hinteren Stirnwand und einer Saugstromführung, die vom Sauganschluss (06) durch eine Sammelkammer (23) und eine Filtereinheit (25) führt, **dadurch gekennzeichnet, dass** der Sauganschluss (06) so an der hinteren Stirnwand positioniert ist, dass er im Querschnitt von einer Symmetrieebene des Materialsammelbehälters (05) gekreuzt wird, und dass der Saugstrom (21) nach dem Durchlaufen der Sammelkammer (23) in mindestens zwei Teilströme aufgeteilt wird, die in beidseitig dieser Symmetrieebene angeordneten Luftkanälen (31) geführt werden, wobei die Luftkanäle (31) außerhalb der Sammelkammer zusammengeführt sind, so dass sie an einem Einlass (33) eines Sauggebläses (26) des Saugbaggers (01) münden können.

2. Materialsammelbehälter (05) nach Anspruch 1, **dadurch gekennzeichnet, dass** die beidseitig der Symmetrieebene angeordneten Luftkanäle (31) abschnittsweise parallel zu den Seitenwänden der Sammelkammer (23) im oberen Drittel des Materialsammelbehälters (05) verlaufen.

3. Materialsammelbehälter (05) nach einem der Ansprüche 1 bis 2, **dadurch gekennzeichnet, dass** er einen mindestens zweigeteilten Deckel (12) besitzt, wobei jedes Deckelteil an einer in der Symmetrieebene des Materialsammelbehälters liegenden Klappachse drehbeweglich befestigt ist.

4. Materialsammelbehälter (05) nach einem der Ansprüche 1 bis 3, **dadurch gekennzeichnet, dass** er an seinen beiden Stirnseiten jeweils ein Drehlager (08) besitzt, welche eine Aufhängung des Materialsammelbehälters in einer in der Symmetrieebene verlaufenden Kippachse (07) gestatten.

5. Saugbagger (01) mit:
- einem Fahrzeuggestell (02), wobei eine Fahrzeuglängsachse (04a) des Fahrzeugs in einer Fahrzeugmittenebene (04) verläuft;
- einem auskippbaren Materialsammelbehälter (05), der in einer parallel zur Fahrzeuglängsachse (04a) verlaufenden Kippachse (07) aufgehängt ist;
**dadurch gekennzeichnet, dass** der Materialsammelbehälter (05) gemäß einem der Ansprüche 1 bis 4 ausgestaltet ist.

6. Saugbagger nach Anspruch 5, **dadurch gekennzeichnet, dass**:
- die Kippachse (07) in der Symmetrieebene des Materialsammelbehälters (05) verläuft, die in einem nicht verkippten Zustand mit der Fahrzeugmittenebene (04) übereinstimmt;
- eine Teleskopiereinrichtung vorgesehen ist, die zwei Teleskoparme (09) besitzt, deren behälterseitiges Ende jeweils an der Kippachse (07) angeordnet ist, um welche der Materialsammelbehälter (05) drehbar ist, und deren gestellseitiges Ende jeweils in der Fahrzeugmittenebene (04) am Fahrzeuggestell (02) schwenkbeweglich befestigt sind;
- mindestens ein Drehantrieb (16) am behälterseitigen Ende mindestens eines Teleskoparms (09) angeordnet ist, um eine Drehung des Materialsammelbehälters (05) um die Kippachse (07) zu ermöglichen;
- mindestens ein Schwenkantrieb (13) angeordnet ist, welcher ein Verschwenken der Teleskoparme (09) aus der Fahrzeugmittenebene (04) heraus in beiden Winkelrichtungen ermöglicht.

7. Saugbagger (01) nach Anspruch 6, **dadurch gekennzeichnet, dass** das Verschwenken der Teleskoparme (09) mindestens soweit möglich ist, dass die projizierte Kippachse (07) außerhalb der vom Fahrzeuggestell (02) beschriebenen Fläche verläuft.

8. Saugbagger (01) nach einem der Ansprüche 5 bis 7, **dadurch gekennzeichnet, dass** die Symmetrieebene des Materialsammelbehälters (05) in einem nicht verkippten Zustand des Materialsammelbehälters (05) mit einer Fahrzeugmittenebene (04) des Saugbaggers (01) übereinstimmt.

9. Saugbagger (01) nach einem der Ansprüche 5 bis 8, **dadurch gekennzeichnet, dass** die Sammelkammer (23) des Materialsammelbehälters (05) in Fahrrichtung des Saugbaggers (01) vor oder hinter der Filtereinheit (25) angeordnet ist.

## Claims

1. A material collecting container (05) for a suction dredger (01) having a suction connection (06) on its rear end wall and a suction stream guide, which leads from the suction connection (06) through a collecting chamber (23) and a filter unit (25), **characterized in that** the suction connection (06) is positioned on the rear end wall such that it is intersected in cross section by the plane of symmetry of the material collecting container (05), and **in that**, after passing through the collecting chamber (23), the suction stream (21) is subdivided into at least two substreams, which are guided in air ducts (31) arranged on both sides of this plane of symmetry, wherein the air ducts (31) are united outside the collecting chamber such that they can discharge at an inlet (33) of a suction blower (26) of the suction dredger (01).

2. The material collecting container (05) according to claim 1, **characterized in that** the air ducts (31) arranged on both sides of the plane of symmetry sectionally extend parallel to the sidewalls of the collecting chamber (23) in the upper third of the material collecting container (05).

3. The material collecting container (05) according to one of claims 1 to 2, **characterized in that** it has a cover (12), which is divided into at least two parts, wherein each cover part is rotatably fastened on a hinge axis that lies in the plane of symmetry of the material collecting container.

4. The material collecting container (05) according to one of claims 1 to 3, **characterized in that** it respectively has a pivot bearing (08) on its two end walls, wherein said pivot bearings allow a suspension of the material collecting container in a tilting axis (07) that extends in the plane of symmetry.

5. A suction dredger (01) comprising:
- a vehicle chassis (02), wherein a longitudinal axis (04a) of the vehicle extends in the center plane (04) of the vehicle;
- a tiltable material collecting container (05), which is suspended in a tilting axis (07) that extends parallel to the longitudinal axis (04a) of the vehicle;
**characterized in that** the material collecting container (05) is designed in accordance with one of claims 1 to 4.

6. The suction dredger according to claim 5, **characterized in that**:
- the tilting axis (07) extends in the plane of symmetry of the material collecting container (05), which in a non-tilted state coincides with the center plane (04) of the vehicle;
- a telescoping device having two telescopic arms (09) is provided, wherein the end of the telescopic arms on the container side is respectively arranged on the tilting axis (07), about which the material collecting container (05) is rotatable, and wherein the end of the telescopic arms on the chassis side respectively is pivotably fastened on the vehicle chassis (02) in the center plane (04) of the vehicle;
- at least one rotary drive (16) is arranged on the end of at least one telescopic arm (09) on the container side in order to allow a rotation of the material collecting container (05) about the tilting axis (07);
- at least one pivot drive (13) is provided and allows a pivoting movement of the telescopic arms (09) out of the center plane (04) of the vehicle in both angular directions.

7. The suction dredger (01) according to claim 6, **characterized in that** the pivoting movement of the telescopic arms (09) is possible at least to such an extent that the projected tilting axis (07) extends outside the surface described by the vehicle chassis (02) .

8. The suction dredger (01) according to one of claims 5 to 7, **characterized in that** the plane of symmetry of the material collecting container (05) coincides with a center plane (04) of the suction dredger (01) in a non-tilted state of the material collecting container (05) .

9. The suction dredger (01) according to one of claims 5 to 8, **characterized in that** the collecting chamber (23) of the material collecting container (05) is arranged in front of or behind the filter unit (25) viewed in the driving direction of the suction dredger (01) .

## Revendications

1. Conteneur collecteur de matériaux (05) destiné à une drague suceuse (01), pourvu d'un raccord d'aspiration (06) sur sa paroi frontale arrière et d'un guidage de flux d'aspiration, qui mène du raccord d'aspiration (06) à travers une chambre collectrice (23) et d'une unité filtrante (25), **caractérisé en ce que** le raccord d'aspiration (06) est positionné sur la paroi frontale arrière, de sorte à être croisé dans la section transversale par un plan de symétrie du conteneur collecteur de matériaux (05) et qu'après avoir traversé la chambre collectrice (23), le flux d'aspiration (21) soit divisé en au moins deux flux partiels qui sont guidés par des canalisations d'air (31) placées de part et d'autre dudit plan de symétrie, les canalisations d'air (31) étant réunies à l'extérieur de la chambre collectrice, de sorte qu'elles puissent déboucher dans une entrée (33) d'un ventilateur aspirant (26) de la drague suceuse (01).

2. Conteneur collecteur de matériaux (05) selon la revendication 1, **caractérisé en ce que** les canalisations d'air (31) placées de part et d'autre du plan de symétrie s'écoulent par tronçons à la parallèle des parois latérales de la chambre collectrice (23), dans le tiers supérieur du conteneur collecteur de matériaux (05).

3. Conteneur collecteur de matériaux (05) selon l'une quelconque des revendications 1 à 2, **caractérisé en ce qu'**il dispose d'un couvercle (12) divisé au moins en deux, chaque partie de couvercle étant fixée de manière mobile en rotation sur un axe de rabattement situé dans le plan de symétrie du conteneur collecteur de matériaux.

4. Conteneur collecteur de matériaux (05) selon l'une quelconque des revendications 1 à 3, **caractérisé en ce qu'**il détient sur ses deux faces frontales respectivement un palier pivotant (08), lesquels admettent un accrochage du conteneur collecteur de matériaux dans un axe de pivotement (07) s'écoulant dans le plan de symétrie.

5. Drague suceuse (01) comprenant :
- un châssis de véhicule (02), un axe longitudinal (04a) de véhicule du véhicule s'écoulant dans un plan médian (04) de véhicule ;
- un conteneur collecteur de matériaux (05) susceptible de basculer, qui est accroché dans un axe de pivotement (07) s'écoulant à la parallèle de l'axe longitudinal (04a) de véhicule ;
**caractérisée en ce que** le conteneur collecteur de matériaux (05) est conçu selon l'une quelconque des revendications 1 à 4.

6. Drague suceuse selon la revendication 5, **caractérisée :**
- **en ce que** l'axe de pivotement (07) s'écoule dans le plan de symétrie du conteneur collecteur de matériaux (05), qui dans un état non basculé coïncide avec le plan médian (04) de véhicule ;
- **en ce qu'**il est prévu un dispositif télescopique qui détient deux bras télescopiques (09), dont l'extrémité côté conteneur est placée respectivement sur l'axe de pivotement (07) autour duquel le conteneur collecteur de matériaux (05) est rotatif, et dont l'extrémité côté châssis est fixée de manière mobile en pivotement respectivement dans le plan médian (04) de véhicule du châssis de véhicule (02) ;
- **en ce qu'**au moins un entraînement en rotation (16) est placé sur l'extrémité côté conteneur d'un bras télescopique (09), pour permettre une rotation du conteneur collecteur de matériaux (05) autour de l'axe de pivotement (07) ;
- **en ce qu'**il est placé au moins un entraînement en pivotement (13), lequel permet un pivotement des bras télescopiques (09) hors du plan médian (04) de véhicule dans les deux directions angulaires.

7. Drague suceuse (01) selon la revendication 6, **caractérisée en ce que** le pivotement des bras télescopiques (09) est possible au moins dans une mesure telle, que l'axe de pivotement (07) projeté s'écoule en-dehors de la surface décrite par le châssis de véhicule (02).

8. Drague suceuse (01) selon l'une quelconque des revendications 5 à 7, **caractérisée en ce que** dans un état non basculé du conteneur collecteur de matériaux (05), le plan de symétrie du conteneur collecteur de matériaux (05) coïncide avec un plan médian (04) de véhicule de la drague suceuse (01).

9. Drague suceuse (01) selon l'une quelconque des revendications 5 à 8, **caractérisée en ce que** dans la direction de déplacement de la drague suceuse (01), la chambre collectrice (23) du conteneur collecteur de matériaux (05) est placée à l'avant ou à l'arrière de l'unité filtrante (25).
